# EUROPÄISCHE PATENTANMELDUNG

(11) **EP 4 270 980 A1**
(43) Veröffentlichungstag der Anmeldung: **01.11.2023**
(21) Anmeldenummer: 22170816.7
(22) Anmeldetag: 29.04.2022
(51) Int. Cl.: H04Q 9/00

(54) **VORRICHTUNG ZUM VERKNÜPFEN VON MESSWERTINFORMATIONEN MIT ZEITINFORMATIONEN, MESSSYSTEM UND VERFAHREN ZUM SYNCHRONISIEREN VON MESSWERTINFORMATIONEN**

(71) Anmelder: Fraunhofer-Gesellschaft zur Förderung der angewandten Forschung e.V., 80686 München (DE)
(72) Erfinder: HILLMEIER, Leonhard, 83626 Valley (DE); BUSCHHAUS, Michael, 83626 Valley (DE); BURDACK-FREITAG, Andrea, 83626 Valley (DE)
(74) Vertreter: König, Andreas Rudolf

(57) **Zusammenfassung**

Eine Vorrichtung umfasst einen Messwerteingang zum Empfangen eines Messwertsignals von einer ersten externen Signalquelle und einen Zeitinformationseingang zum Empfangen einer Zeitinformation von einer von der ersten Signalquelle verschiedenen zweiten externen Signalquelle. Die Vorrichtung umfasst einen Datenspeicher und eine Steuerungseinrichtung, die ausgebildet ist, um eine auf dem Messwertsignal basierende Messwertinformation mit der Zeitinformation zu einer Protokollinformation zu verknüpfen und die Protokollinformation in dem Datenspeicher zu speichern. Die Vorrichtung ist ausgebildet, um die Protokollinformation an der Datenschnittstelle auszugeben.

## Beschreibung

Die vorliegende Erfindung bezieht sich auf eine Vorrichtung, ein Messsystem und auf ein Verfahren, bei dem Messwertinformationen mit einer Zeitinformation verknüpft werden, was innerhalb eines Systems nutzbar ist, um unterschiedliche Geräte zu synchronisieren. Die vorliegende Erfindung bezieht sich ferner auf ein harmonisiertes und modulares, möglicherweise WLAN-gestütztes Datenlogger-System zur Erfassung parallel betriebener Sensoren und Detektoren.

In einem chemisch-technischen Laboratorium vorhandene Sensoren und Detektoren, hierin bezeichnet als Geräte, sind von unterschiedlichen Herstellern entwickelt und können somit von unterschiedlichen Quellen bezogen werden. Die Bedienung, Datengenerierung und der Datenexport unterscheiden sich erheblich von Gerät zu Gerät. Dies beginnt bei sehr einfachen Sensoren, bei denen lediglich ein Spannungswert ausgelesen werden muss, bis hin zu extrem umfangreichen Geräten, die zeitaufgelöste Signale auf mehreren Kanälen erfassen. Die Schnittstellen zur Übertragung an den Geräten können analog und/oder digital sein, wobei letztere verschiedene Übertragungsprotokolle verwenden. Zur Weiterverarbeitung der generierten Messdaten werden die verschiedenen Datensätze von den Geräten auf einen Computer übertragen und dort manuell zusammengeführt. Dieser Vorgang ist aufgrund von abweichenden Datenformaten und abweichenden Systemzeiten der Geräte extrem zeitaufwendig sowie fehleranfällig.

Für die unterschiedlichen Übertragungsprotokolle gibt es somit zahlreiche Ausführungen der unterschiedlichen Protokolle. Derzeit werden daher die vorhandenen Geräte entweder über deren internen digitalen Speicher ausgelesen und mittels externer Speichermedien übertragen oder die analogen Spannungsausgänge der Geräte werden mit einem Spannungsmessgerät, beispielsweise einem Datenlogger der Firma Agilent, überwacht. Zahlreiche Messwerte können aber nur über eine spezifische Herstellersoftware im Nachgang der Messung extrahiert werden. Zudem werden die Systemzeiten der Messgeräte entweder vor dem Beginn einer Messung abgeglichen oder im Nachgang zurückgerechnet. Dieser manuelle Vorgang ist erheblich fehleranfällig und zeitaufwendig. Beispiele für eine derartige Vorgehensweise sind bekannt für:
- verschiedene Partikelmessgeräte mit digitalen Schnittstellen, einem Datentransfer mittels USB-Stick;
- Gasanalysatoren (Ozon, NOx, CO/CO₂) mit analogen Spannungsschnittstellen, Datentransfer mittels Spannungsmessgerät;
- Anemometer mit analoger Schnittstelle, Datentransfer mittels Ablesen des Displays; und/oder
- digitales Leistungsmessgerät, Datentransfer mittels Hersteller-WEB-Interface.

Es besteht deshalb ein Bedarf an einer robusten, einfachen und fehlerunanfälligen Analyse von Messwerten.

Eine Aufgabe der vorliegenden Erfindung besteht deshalb darin, eine Vorrichtung, ein Messsystem und ein Verfahren zu schaffen, die es ermöglichen, Messwerte robust, einfach und fehlerunanfällig zu analysieren.

Diese Aufgabe wird durch den Gegenstand der unabhängigen Patentansprüche gelöst.

Gemäß einem Ausführungsbeispiel umfasst eine Vorrichtung einen Messwerteingang zum Empfang eines Messwertsignals von einer ersten externen Signalquelle und einen Zeitinformationseingang zum Empfangen einer Zeitinformation von einer von der ersten Signalquelle verschiedenen zweiten externen Signalquelle. Die Vorrichtung umfasst einen Datenspeicher und eine Steuerungseinrichtung, die ausgebildet ist, um eine auf dem Messwertsignal basierende Messwertinformation mit der Zeitinformation zu einer Protokollinformation zu verknüpfen und die Protokollinformation in dem Datenspeicher zu speichern. Die Vorrichtung ist ausgebildet, um die Protokollinformation an der Datenschnittstelle auszugeben. Die Verknüpfung der Messwertinformation mit einer von einer anderen Signalquelle erhaltenen Zeitinformation ermöglicht es, die Messwerte mit einer derartigen externen Zeitschiene zusammenzuführen, was sowohl eine spätere Auswertung als auch einen späteren Vergleich oder weitere Verarbeitung beziehungsweise Steuerung von Vorrichtungen in einer robusten, einfachen und fehlerunanfälligen Weise ermöglicht.

Gemäß einem Ausführungsbeispiel ist der Zeitinformationseingang mit einer Drahtlosschnittstelle gekoppelt, was es ermöglicht, auch ohne Drahtverbindung und möglicherweise über weite Strecken, die Messwertinformation mit entsprechender Zeitinformation zu verknüpfen. Alternativ oder zusätzlich kann der Messwerteingang mit einer drahtgebundenen oder drahtlosen Schnittstelle gekoppelt sein, was es ermöglicht, die Vorrichtung mit unterschiedlichen Quellen von Messwertinformationen zu verbinden.

Gemäß einem Ausführungsbeispiel ist die Steuerungseinrichtung ausgebildet, um die Protokollinformation basierend auf einer von der Vorrichtung empfangenen Anfrage an der Datenschnittstelle auszugeben. Das bedeutet, eine Speicherung in dem Datenspeicher kann beispielsweise bis zur empfangenen Anfrage gespeichert werden, beispielsweise im Sinne eines Datenpuffers. Dies ermöglicht es, die Protokollinformationen so lange zu speichern, selbst wenn eine kontinuierliche Abfrage der Information nicht erfolgt.

Gemäß einem Ausführungsbeispiel ist die Vorrichtung ausgebildet, um basierend auf dem Messwertsignal eine Mehrzahl von zeitdiskreten Messwertinformationen innerhalb eines ersten Zeitintervalls zu erhalten. Die Steuerungseinrichtung ist ausgebildet, um jede der Mehrzahl von Messwertinformationen mit einer jeweiligen Zeitinformation zu verknüpfen, um eine Mehrzahl von Protokollinformationen zu erhalten, und um die Mehrzahl von Protokollinformationen in dem Datenspeicher zu speichern. So kann die jeweilige Zeitinformation korrespondierend zum zeitdiskreten Messwert empfangen werden und/oder aufgrund interner Zeitberechnungen abgeleitet werden. Die Steuerungseinrichtung kann ausgebildet sein, um die Mehrzahl von Protokollinformationen zu einem späteren zweiten Zeitintervall aus dem Datenspeicher zu lesen und an der Datenschnittstelle auszugeben, etwa aufgrund eines internen Steuerungsbefehls oder aufgrund einer externen Anfrage. Dies ermöglicht es beispielsweise auch, die Daten über eine gesamte Messung zwischenzuspeichern und zu einer Protokollinformation zu verknüpfen und beispielsweise nach erfolgter Messung auszugeben.

Gemäß einem Ausführungsbeispiel ist die Steuerungseinrichtung ausgebildet, um die Mehrzahl von Protokollinformationen gebündelt in einer gemeinsamen Protokollnachricht unter Verwendung der Datenschnittstelle auszugeben. Dies ermöglicht einen geringen Umfang an Datenverkehr, insbesondere unter Verwendung drahtloser Kommunikationskanäle und möglicherweise mehrerer erfindungsgemäßer Vorrichtungen in einem Messsystem.

Gemäß einem Ausführungsbeispiel ist die Vorrichtung ausgebildet, um fortlaufend Messwertinformationen als Protokollinformationen in dem Datenspeicher zu puffern und zyklisch, basierend auf einer Anfrage und/oder basierend auf einem Kommunikationsprotokoll der Datenschnittstelle, in einer jeweiligen gemeinsamen Protokollnachricht zu bündeln und an der Datenschnittstelle auszugeben. Dies ermöglicht eine einfache Datenverarbeitung für einen Empfänger der jeweiligen Protokollnachricht.

Gemäß einem Ausführungsbeispiel ist die Steuerungseinrichtung ausgebildet, um das Messwertsignal unter Anwendung einer Signalverarbeitung zu verarbeiten, um die Messwertinformation zu erhalten. Dies kann sich beispielsweise auf eine Quantisierung, eine Codierung, eine Skalierung oder dergleichen beziehen. Beispielsweise kann die Steuerungseinrichtung aus einem analogen Messwertsignal abgetastete Werte erhalten und diese optional weiterverarbeiten, um die Messwertinformation zu erhalten. Eine derartige Vorverarbeitung ermöglicht bereits eine Anpassung der Protokollinformation an spätere Zwecke, was insbesondere synergetisch vorteilhaft ist, wenn die Art und Weise der Signalverarbeitung anpassbar ist, was Ausführungsbeispiele vorsehen. Dies ermöglicht eine unterschiedliche Signalverarbeitung basierend auf unterschiedlichen Anforderungen.

Gemäß einem Ausführungsbeispiel weist die Vorrichtung eine lokale Signalquelle auf, die ausgebildet ist, um vermittels eines akustischen und/oder optischen Signals eine mit dem Betrieb oder Zustand der Vorrichtung assoziierten Information auszugeben. Dies ist insbesondere in Zusammenschau damit vorteilhaft, dass die Protokollinformation möglicherweise an einen entfernten Empfänger übertragen wird oder vollständig zwischengepuffert wird, womit am Ort der Vorrichtung die Messwertinformation möglicherweise unzugänglich ist. Durch eine lokale Anzeige eines Status oder Zustands der Vorrichtung ist es möglich, auch ohne derartige Informationen vor Ort den Zustand der Messung zu beurteilen.

Gemäß einem Ausführungsbeispiel ist die Vorrichtung ausgebildet, um die Messwertinformation aus dem Messwertsignal basierend auf einer Vorrichtungseinstellung abzuleiten, wobei die Vorrichtung ausgebildet ist, um die Vorrichtungseinstellung basierend auf einem empfangenen Konfigurationssignal zu verändern. Das Konfigurationssignal kann mittels einer Datenschnittstelle empfangen werden und/oder lokal, etwa durch Taster oder dergleichen, erzeugt werden. Eine veränderliche Konfiguration der Vorrichtung ermöglicht ein hohes Maß an Flexibilität und dennoch eine Beibehaltung der robusten, einfachen und fehlerunanfälligen Analyse.

Gemäß einem Ausführungsbeispiel ist die Vorrichtung ausgebildet, um die Messwertinformation mit der Zeitinformation zu der Protokollinformation basierend auf einer Menge von parametrierbaren Anweisungen zu verknüpfen. Die Vorrichtung kann ausgebildet sein, um basierend auf dem Konfigurationssignal zumindest eines aus einer Änderung eines Parameters der parametrierbaren Anweisungen, einer Hinzufügung einer zusätzlichen parametrierbaren Anweisung zu der Menge parametrisiererbarer Anweisungen, einer Entfernung einer parametrierbaren Anweisung aus der Menge parametrisierbarer Anweisungen und einer Änderungen einer für einer der parametrisierbaren Anweisung ausgeführten Instruktion auszuführen. Dies ermöglicht die Anpassung bzw. Justierung der Betriebsweise der Vorrichtung an unterschiedliche Aufgaben.

Gemäß einem Ausführungsbeispiel ist die Vorrichtung ausgebildet, um einen Betrieb in einem Betriebszustand aus einer Gruppe von Betriebszuständen auszuführen, also gemäß einer Auswahl aus der Gruppe von Betriebszuständen. Die Gruppe umfasst beispielsweise einen ersten Betriebszustand, in welchem die Vorrichtung die Protokollinformation in den Datenspeicher ablegt, aus dem Datenspeicher liest und an der Datenschnittstelle bereitstellt. In einem zweiten Betriebszustand leitet die Vorrichtung eine von einer anderen Vorrichtung empfangene Protokollinformation unter Verwendung der Datenschnittstelle weiter. In einem dritten Betriebszustand ist die Vorrichtung ausgebildet, um das Ausgeben der Protokollinformation bis zum Eintritt eines vordefinierten Ereignisses zu verzögern, beispielsweise bis ein externer Datenspeicher verbunden wird, ein drahtgebundenes Auslesen erfolgt oder ein anderes Ereignis eintritt. Die Auswahl zwischen mehreren unterschiedlichen Betriebszuständen ermöglicht einen flexiblen Einsatz der Vorrichtung.

Gemäß einem Ausführungsbeispiel ist die Steuerungseinrichtung ausgebildet, um eine Authentifizierung an der zweiten Signalquelle auszuführen, was eine hohe Sicherheit der Messwertanalyse ermöglicht.

Gemäß einem Ausführungsbeispiel ist die Vorrichtung ausgebildet, um einen von der ersten Signalquelle oder der zweiten Signalquelle empfangenen Steuerungsbefehl auszuführen, wobei insbesondere von der zweiten Signalquelle beispielsweise ein Start-Stopp-Befehl oder dergleichen empfangen werden kann. Die Vorrichtung kann somit durch die zweite Signalquelle gesteuert werden.

Gemäß einem Ausführungsbeispiel umfasst ein Messsystem eine Mehrzahl von hierin beschriebenen Vorrichtungen. Ferner umfasst das Messsystem eine Koordinationseinrichtung, die mit der Mehrzahl von Vorrichtungen als gemeinsame zweite Signalquelle gekoppelt ist und ausgebildet ist, um der Mehrzahl von Vorrichtungen die Zeitinformation bereitzustellen. Die Koordinationseinrichtung ist vermittels der Zeitinformation für eine Synchronisierung der Mehrzahl von Vorrichtungen eingerichtet. Die Protokollinformation der Mehrzahl von Vorrichtungen basiert insofern auf einer übereinstimmenden Zeitinformation, was es vorteilhaft ermöglicht, an der Koordinationseinrichtung unterschiedliche Protokollinformationen, möglicherweise unabhängig von der jeweiligen Messwertinformation, zeitlich zu korrelieren.

Gemäß einem Ausführungsbeispiel umfasst das Messsystem eine Mehrzahl von Messgeräten, von denen jedes mit einer der Mehrzahl von Vorrichtungen gekoppelt ist und zur Erfassung zumindest eines Messwertparameters und zur Bereitstellung eines zugeordneten Messwerts an einem Messwertausgang eingerichtet ist. Die Koordinationseinrichtung ist durch die Zeitinformation für eine Synchronisierung der Protokollinformation der Mehrzahl von Vorrichtungen eingerichtet. Dies ermöglicht eine Synchronisierung der Protokollinformationen beziehungsweise Messwertinformationen auch unabhängig von einem jeweiligen Messprotokoll der Messgeräte.

Gemäß einem Ausführungsbeispiel weist das Messsystem ferner eine Datenverarbeitungseinrichtung auf, die ausgebildet ist, um die Protokollinformationen von der Mehrzahl von Vorrichtungen zu empfangen, wobei die Protokollinformationen basierend auf der übereinstimmenden Zeitinformation an der Datenverarbeitungseinrichtung in zeitlichem Bezug zueinander vorliegen. Die Datenverarbeitungseinrichtung kann dieselbe oder eine andere Einrichtung als die Koordinationseinrichtung sein. Gemäß Ausführungsbeispielen können beide Einrichtungen, die Koordinationseinrichtung und die Datenverarbeitungseinrichtung, in einer gemeinsamen Vorrichtung implementiert werden, beispielsweise einem Computer, einem Mikrocontroller oder anderen mobilen oder stationären Einrichtungen.

Gemäß einem Ausführungsbeispiel umfasst ein Verfahren ein Betreiben einer Mehrzahl von Messgeräten, um jeweils einen Messparameter zu messen und um ein jeweiliges Messergebnis von dem Messgerät zu erhalten. Das Verfahren umfasst ein Betreiben einer Mehrzahl von Synchronisationsvorrichtungen, so dass jede Synchronisationsvorrichtung ein Messwertsignal von einem Messgerät empfängt, das das Messergebnis des Messgerät wiedergibt. Bei den Synchronisationsvorrichtungen handelt es sich beispielsweise um hierin beschriebene Vorrichtungen. Das Verfahren umfasst ein Übermitteln einer Zeitinformation an die Mehrzahl von Synchronisationsvorrichtungen aus einer übereinstimmenden Zeitinformationsquelle. Das Verfahren umfasst ferner ein Verknüpfen, in jeder der Mehrzahl von Synchronisationsvorrichtungen, der Zeitinformation mit einer aus dem Messwertsignal abgeleiteten Messwertinformation, um eine Protokollinformation zu erhalten. Das Verfahren umfasst ferner ein Übermitteln einer Protokollinformation von der Mehrzahl von Synchronisationsvorrichtungen an eine Datenverarbeitungseinrichtung, so dass die Protokollinformationen der Mehrzahl von Synchronisationsvorrichtungen an der Datenverarbeitungseinrichtung in zeitlichem Bezug zueinander vorliegen. Dies ermöglicht es, einen zeitlichen Bezug zu voneinander möglicherweise verschieden messenden und/oder auf verschiedenen Prinzipien beruhenden Messgeräten zu erhalten, wobei es aufgrund der Synchronisationsvorrichtungen auch möglich ist, unterschiedlich aufgebaute Messsysteme mit denselben Synchronisationsvorrichtungen zu einem geeigneten Messbetrieb auszurüsten.

Gemäß einem Ausführungsbeispiel ist eine hierin beschriebene Vorrichtung vermittels des Messwerteingangs für eine Kopplung mit einem Messgerät eingerichtet und ausgebildet, um von dem Messgerät vermittels des Messwertsignals empfangene Messwerte mit der Zeitinformation zu verknüpfen und als Protokollinformation an der Datenschnittstelle bereitzustellen.

Gemäß einem Ausführungsbeispiel ist die Vorrichtung ausgebildet, um mittels des Messwerteingangs ein analoges Messwertsignal zu empfangen. Die Steuerungseinrichtung kann ausgebildet sein, um das analoge Messwertsignal zum Erhalt der Messwertinformation abzutasten. Dies ermöglicht eine digitale Datenverarbeitung auch bei analogem Messwerteingang. Gemäß einem Ausführungsbeispiel ist eine derartige Steuerungseinrichtung ausgebildet, um das Messwertsignal mit einer Abtastrate abzutasten und die Abtastrate basierend auf einem mit der Vorrichtung empfangenen Konfigurationssignal zu verändern, was es ermöglicht, unterschiedliche Messaufgaben zu erledigen. Hierzu kann die Steuerungseinrichtung einen Analog-Digital-Wandler (engl.: analog digital converter, ADC) aufweisen oder zur Steuerung desselben mit einem solchen verbunden sein. Das bedeutet, gemäß einem Ausführungsbeispiel ist der Messwerteingang 12 zum Empfang eines analogen Messwertsignals eingerichtet und die Steuerungseinrichtung ist ausgebildet, um das analoge Messwertsignal zum Erhalt der Messwertinformation abzutasten.

Gemäß einem Ausführungsbeispiel ist die Steuerungseinrichtung ausgebildet, um die Protokollinformation basierend auf einer erfolgreichen Übermittlung an der Datenschnittstelle aus dem Datenspeicher zumindest teilweise zu löschen, was es ermöglicht, den freigegebenen Speicher für weitere Messaufgaben wiederzuverwenden, so dass insgesamt ein vergleichsweise kleiner Datenspeicher verwendet werden kann, was vorteilhaft ist.

Gemäß einem Ausführungsbeispiel ist der Datenspeicher ein nichtflüchtiger Speicher, was es ermöglicht, die Vorrichtung nach erfolgter Messaufgabe bis zu einem Auslesen zu deaktivieren, ohne Protokollinformation zu verlieren.

Weitere vorteilhafte Ausgestaltungen sind der Gegenstand abhängiger Patentansprüche.

Besonders bevorzugte Ausführungsformen der vorliegenden Erfindung werden nachfolgend Bezug nehmend auf die beiliegenden Zeichnungen erläutert. Es zeigen:
- Fig. 1: ein schematisches Blockschaltbild einer Vorrichtung gemäß einem Ausführungsbeispiel;
- Fig. 2: ein schematisches Blockschaltbild zur Verdeutlichung der Verknüpfung von Messwertinformation und Zeitinformation gemäß Ausführungsbeispielen;
- Fig. 3: eine beispielhafte Ablichtung einer Vorrichtung gemäß einem Ausführungsbeispiel, die eine lokale Signalquelle aufweist;
- Fig. 4a-d: beispielhafte perspektivische Ansichten von Vorrichtungen gemäß Ausführungsbeispielen, mit unterschiedlichen Schnittstellen zum Empfang von Messwertsignalen;
- Fig. 5: ein schematisches Zustandsdiagramm einer hierin beschriebenen Vorrichtung gemäß einem Ausführungsbeispiel;
- Fig. 6: ein schematisches Blockschaltbild einer Vorrichtung gemäß einem Ausführungsbeispiel, bei der eine Steuerungseinrichtung mit einem Datenspeicher gekoppelt ist;
- Fig. 7: ein schematisches Blockschaltbild eines Messsystems gemäß einem Ausführungsbeispiel;
- Fig. 8: ein schematisches Blockschaltbild eines Messsystems mit einer Koordinationseinrichtung gemäß einem Ausführungsbeispiel;
- Fig. 9: ein schematisches Ablaufdiagramm eines Verfahrens gemäß einem Ausführungsbeispiel, das beispielsweise zum Betrieb eines hierin beschriebenen Messsystems ausgeführt werden kann;
- Fig. 10: ein schematisches Ablaufdiagramm eines Verfahrens gemäß einem Ausführungsbeispiel, das zum Beispiel zum Betreiben einer hierin beschriebenen Vorrichtung ausgeführt werden kann; und
- Fig. 11: ein schematisches Blockschaltbild unterschiedlicher exemplarischer und möglicherweise digital von unterschiedlichen Messgeräten bereitgestellter Messwertsignale gemäß Ausführungsbeispielen.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer Detaildarstellung beschrieben. Ferner können Details und/oder Merkmale einzelner Ausführungsbeispiele ohne Weiteres mit einander kombiniert werden, solange es nicht explizit gegenteilig beschrieben ist.

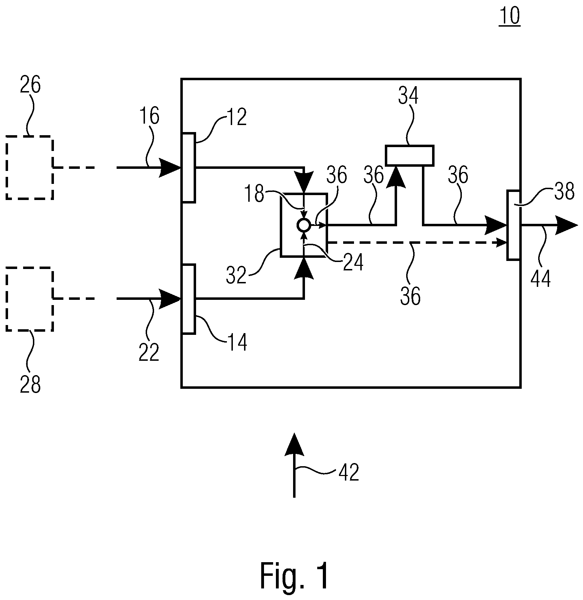

Fig. 1 zeigt ein schematisches Blockschaltbild einer Vorrichtung 10 gemäß einem Ausführungsbeispiel. Die Vorrichtung 10 umfasst einen Messwerteingang 12 und einen Zeitinformationseingang 14. Der Messwerteingang 12 ist zum Empfangen eines Messwertsignals 16 eingerichtet, das eine Messwertinformation 18 enthält. Bei dem Messwertsignal 18 kann es sich beispielsweise um ein analoges oder digitales Signal handeln, das von einem Messgerät ausgegeben wird und vermittels drahtgebundener oder drahtloser Datenübertragung an dem Messwerteingang 12 bereitgestellt wird. Anders ausgedrückt kann das Messwertsignal 16 ein Signal zum Übertragen der Messwertinformation 18, etwa eines kontinuierlichen oder diskreten Messwerts sein.

Der Zeitinformationseingang 14 ist zum Empfang eines Zeitinformationssignals 22 eingerichtet, das eine Zeitinformation 24 aufweist. Bei der Zeitinformation 24 kann es sich um eine Uhrzeit, eine Systemzeit oder eine beliebige andere veränderliche Zeitangabe handeln.

Der Messwerteingang 12 kann mit einer physikalischen Schnittstelle zum Empfang des Messwertsignals 16 gekoppelt sein. In ähnlicher Weise kann der Zeitinformationseingang 14 mit einer Schnittstelle gekoppelt sein, um das Zeitinformationssignal 22 zu empfangen. Dabei können der Messwerteingang 12 und der Zeitinformationseingang 14 logisch voneinander getrennte Einrichtungen sein, die physikalisch aber zusammengefasst sein können oder getrennt voneinander implementiert werden können. Beispielsweise können die korrespondierenden Schnittstellen separate Schnittstellen sein, etwa unterschiedliche drahtgebundene und/oder drahtlose Schnittstellen, können aber auch eine gemeinsame Schnittstelle aufweisen, die ausgelegt ist, um das entsprechende Messwertsignal 16 und das Zeitinformationssignal 22 von unterschiedlichen externen Signalquellen zu empfangen.

Während die Vorrichtung zum Empfang des Messwertsignals 16 von einer ersten Signalquelle eingerichtet ist, ist die Vorrichtung zum Empfang des Zeitinformationssignals 22 von einer hiervon verschiedenen zweiten Signalquelle eingerichtet. Dies schließt allerdings die Verwendung eines gemeinsamen Kommunikationsnetzwerks nicht aus.

Die Vorrichtung umfasst ferner eine Steuerungseinrichtung 32 und einen Datenspeicher 34. Der Datenspeicher 34 kann ganz oder teilweise ein flüchtiger und/oder ganz bzw. teilweise ein nichtflüchtiger Speicher sein. Der Datenspeicher 34 kann Teil der Steuerungseinrichtung 32 oder ein hiervon verschiedenes Element sein. Ein nichtflüchtiger Speicher kann Vorteile bei der Energieversorgung und der Datensicherheit mit sich bringen.

Die Steuerungseinrichtung 32 kann zum Ausführen einer Datenverarbeitung eingerichtet sein und beispielsweise einen Prozessor, einen Mikrocontroller, ein feldprogrammierbares Gatterarray (FPGA) oder dergleichen umfassen. Die Steuerungseinrichtung 32 ist ausgebildet, um die Messwertinformation 18 mit der Zeitinformation 24 zu einer Protokollinformation 36 zu verknüpfen und die Protokollinformation 36 in dem Datenspeicher 34 zu speichern. Gemäß einer Ausführungsform umfasst die Protokollinformation 36 die Messwertinformation und die Zeitinformation als hierzu zugeordneten Zeitstempel. Dies ermöglicht es, die Messwertinformation mit einer vermittels der zweiten Signalquelle 28 bereitgestellten Zeitinformation zu verknüpfen und so die Ereignisse des Empfangs des Messwerts und der Zeitinformation miteinander zu verknüpfen, was den Informationsgrad der Messwertinformation erhöht und darüber hinaus die Auswertung, die Verarbeitung und das damit verbundene Messsystem vereinfacht.

Die Vorrichtung 10 ist ausgebildet, um die Protokollinformation 36 an einer Datenschnittstelle 38 auszugeben. Die Datenschnittstelle 38 kann von einer mit dem Messwerteingang 12 und/oder dem Zeitinformationseingang 14 gekoppelten Schnittstelle verschieden sein, kann aber auch mit einer derartigen Schnittstelle kombiniert sein, so dass vermittels der Datenschnittstelle 38 auch das Messwertsignal 16 und/oder das Zeitinformationssignal 22 verbunden werden kann. Das Ausgeben der Protokollinformation 36 kann vermittels einer Protokollnachricht 44 drahtlos und/oder drahtgebunden erfolgen.

Die Protokollinformation 36 kann ausgehend von der Steuerungseinrichtung 32 mittelbar unter Zwischenspeicherung in dem Datenspeicher 34 an der Datenschnittstelle 38 ausgegeben werden oder alternativ auch direkt aus der Datenschnittstelle 32 selbst, gegebenenfalls unter zusätzlicher zumindest zeitweiliger Speicherung in dem Datenspeicher 34.

Gemäß einem Ausführungsbeispiel ist der Zeitinformationseingang 14 mit einer Drahtlosschnittstelle gekoppelt. Hierzu bieten sich insbesondere zentrale oder dezentrale Drahtlosnetzwerke an, beispielsweise Bluetooth^{®}, WLAN oder Drahtlosnetzwerke unter Ausführung anderer Protokolle. Dies ermöglicht den Erhalt der Zeitinformation 24 von einem entfernten Ort und die Versorgung der Vorrichtung 10 mit der Zeitinformation 24 ohne hohen Verkabelungsaufwand. Ebenso kann der Messwerteingang 12 mit derselben oder einer anderen drahtlosen Schnittstelle gekoppelt sein. Andere Ausführungsbeispiele sehen vor, dass der Zeitinformationseingang 14 mit einer drahtgebundenen Schnittstelle gekoppelt ist, beispielsweise mit dem Ausgang eines Messgeräts. Dies ermöglicht die dezentrale Platzierung der Vorrichtung 10 am Ort oder benachbart zu dem Messgerät und den Empfang der Zeitinformation von einer möglicherweise entfernt angeordneten Koordinationseinrichtung, was es insbesondere bei paralleler Verwendung mehrerer Vorrichtungen 10 im Zusammenhang mit mehreren Messgeräten ermöglicht, die Koordinationseinrichtung zur Versorgung mehrerer Vorrichtungen mit einer übereinstimmenden Zeitinformation zu verwenden, ohne den entsprechenden Verkabelungsaufwand betreiben zu müssen.

Das Ausgeben der Protokollinformation 36 an der Datenschnittstelle 38 kann zyklisch oder anderweitig vorher bestimmt erfolgen, etwa basierend auf einer konstanten oder veränderlichen Konfiguration. Die Vorrichtung 10 kann ausgebildet sein, um die Protokollinformation 36 basierend auf einer von der Vorrichtung 10 empfangenen Anfrage 42 auszugeben. Die Anfrage 42 kann beispielsweise von der zweiten Signalquelle 28 oder einer anderen Signalquelle unter Aussenden eines entsprechenden Signals ausgegeben werden und von der Vorrichtung 10 empfangen werden. Die Anfrage 42 kann dabei explizit oder implizit erfolgen. Als explizite Anfrage kann es beispielsweise verstanden werden, ein entsprechendes Kommando an die Vorrichtung 10 zu senden, die verfügbare Protokollinformation und/oder die Protokollinformation eines vorbestimmten Zeitintervalls oder dergleichen zu übermitteln. Alternativ oder zusätzlich kann implizit eine Anfrage dergestalt erfolgen, dass in einem von der Datenschnittstelle 38 genutzten Kommunikationsprotokoll entsprechende Ressourcen reserviert werden, wobei die entsprechenden Ressourcen von der Vorrichtung 10 beziehungsweise der Steuerungseinrichtung 32 so interpretiert werden, dass diese zur Übermittlung der Protokollinformation 36 zu nutzen sind.

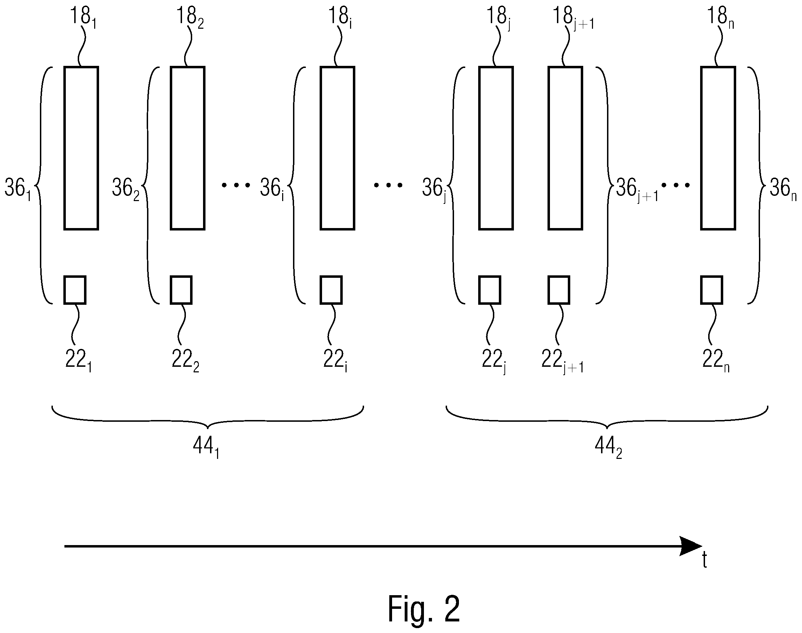

Fig. 2 zeigt ein schematisches Blockschaltbild zur Verdeutlichung der Verknüpfung von Messwertinformation 18 und Zeitinformation 22 in der Vorrichtung 10. In Fig. 2 sind mehrere Messwertinformationen 18₁ bis 18ₙ dargestellt, wobei deren Anzahl abweichend von der Darstellung der Fig. 2 auch 1, 2, 3 oder mehr, etwa 5, 6, 8, 10 oder mehr, betragen kann. Beispielsweise kann es sich bei den Messwertinformationen 18₁ bis 18ₙ um zeitdiskret an dem Messwerteingang 12 empfangene Werte handeln oder um vermittels einer durch die Vorrichtung 10 bereitgestellten Abtastung des Messwertsignals 16 erhaltene Werte.

Eines, mehrere oder alle der Messwertinformationen 18₁ bis 18ₙ können durch die Steuerungseinrichtung 32 mit einer jeweiligen Zeitinformation 22₁ bis 22ₙ verknüpft werden, um eine jeweilige Protokollinformation 36₁ bis 36ₙ zu erhalten. Dies schließt eine Kombination oder Verknüpfung mit zusätzlichen weiteren Informationen oder eine Weiterverarbeitung des erhaltenen Ergebnisses nicht aus, beispielsweise weitere Ableitungen/Interpretationen des Messwerts 18 und/oder der Zeitinformation. Die Zeitinformation 22₁ bis 22ₙ kann beispielsweise, in Abhängigkeit des Zeitinformationssignals 22, angeben, zu welchem Zeitpunkt die Messwertinformation 18₁ bis 18ₙ von der Vorrichtung 10 empfangen oder zu einer Protokollinformation verknüpft wurde. Insofern können die Zeitinformationen 22₁ bis 22ₙ nacheinander auftretende Zeitpunkte darstellen, die sich aufgrund von parallelem Datenerhalt aber auch zeitlich überschneiden oder überlappen können.

Gemäß Ausführungsbeispielen kann jede der Protokollinformation 36₁ in einer eigenen Protokollnachricht 44 übermittelt werden. Ausführungsbeispiele sehen jedoch alternativ hierzu vor, dass die Steuerungseinrichtung 32 ausgebildet ist, um eine Mehrzahl von zumindest 2, zumindest 3 oder mehr Protokollinformationen, etwa 36₁ bis 36ᵢ und 36ⱼ bis 36ₙ, zu einer jeweiligen Protokollnachricht 44₁ und 44₂ zu bündeln, so dass mehrere Protokollinformationen in einer gemeinsamen Protokollnachricht 44₁ beziehungsweise 44₂ mit der Datenschnittstelle der Vorrichtung 10 ausgegeben werden können.

Dies bietet insbesondere Vorteile, wenn die Vorrichtung 10 als Datenpuffer genutzt wird, wobei eine Pufferungszeit beliebig sein kann, von ein paar Millisekunden, ein paar Sekunden über Minuten oder Stunden bis hin zum Puffern ganzer Messreihen, insbesondere wenn ein beispielsweise drahtlos genutztes Kommunikationsprotokoll einer entsprechen drahtlosen Datenschnittstelle 38 während einer Messreihe nicht genutzt werden soll, beispielsweise bei Messungen in einem Flugzeug oder dergleichen. In einer derartigen Ausführungsform und einem entsprechenden Betriebszustand kann die Zeitinformation von der entsprechenden Signalquelle 28 bereitgestellt und durch die Steuerungseinrichtung 32 weitergeführt werden, während die Vorrichtung 10 die Protokollinformation 36 speichert oder loggt. Nach Ende der Messreihe beziehungsweise nach einer Landung des Flugzeugs oder einem Eintritt eines sonstigen Ereignisses können die Daten dann drahtgebunden, über ein externes Speichermedium oder unter Verwendung einer Drahtlosschnittstelle übertragen werden.

Basierend auf dem Messwertsignal 16 können eine Mehrzahl von zeitdiskreten Messwertinformationen innerhalb eines Zeitintervalls erhalten werden. Die Steuerungseinrichtung 32 der Vorrichtung 10 kann ausgebildet sein, um jede der Mehrzahl von Messwertinformationen 18 mit einer jeweiligen Zeitinformation 22 zu verknüpfen, um eine Mehrzahl von Protokollinformationen 36 zu erhalten, wie es beispielsweise im Zusammenhang mit der Fig. 2 erörtert ist. Zu einem späteren anderen Zeitintervall kann die Steuerungseinrichtung 32 die Mehrzahl von Protokollinformationen aus dem Datenspeicher 34 lesen und an der Datenschnittstelle 38 ausgeben.

Bei einer Verwendung als Datenpuffer, was abhängig vom Betriebszustand oder basierend auf einer Implementierung der Vorrichtung 10 erfolgen kann, kann die Vorrichtung 10 fortlaufend Messwertinformationen als Protokollinformationen in dem Datenspeicher 34 puffern und zyklisch, basierend auf der Anfrage 42 und/oder basierend auf einem Kommunikationsprotokoll der Datenschnittstelle 38 in einer jeweiligen gemeinsamen Protokollnachricht 44 bündeln und an der Datenschnittstelle 38 ausgeben. Die Bündelung ist in diesem Fall jedoch optional, es können auch einzelne Protokollinformationen 36 übertragen werden, auch wenn dies zu einem hohen Kommunikationsoverhead führen kann, was aber den Vorteil einer kontinuierlicheren Übermittlung mit sich bringen kann.

Basierend auf einer erfolgreichen Übermittlung an der Datenschnittstelle 38 kann die Steuerungseinrichtung 32 ausgebildet sein, um die übermittelten Protokollinformationen aus dem Datenspeicher 34 zu löschen, zu komprimieren oder anderweitig Speicherplatz im Datenspeicher 34 wieder freizugeben.

Die in Fig. 1 beschriebene Vorrichtung 10 kann ausgebildet sein, um das Messwertsignal 16 zu verarbeiten, wobei die Steuerungseinrichtung 32 hierzu eine Signalverarbeitungsfunktion aufweisen kann. Diese kann genutzt werden, um die Messwertinformation 18 zu erhalten. Bei der Signalverarbeitung kann es sich beispielsweise um die Verarbeitung eines analogen Messwertsignals 16 handeln und beispielsweise eine Digitalisierung mittels Wandelung, eine Quantisierung im Wertbereich und/oder Zeitbereich, eine Abtastung, eine Codierung oder eine Skalierung handeln. Eine vergleichbare oder ähnliche Funktion kann auch bei einem digitalen Messwertsignal 16 bereitgestellt werden, wobei digitale Signale alternativ oder zusätzlich auch einer Fehlerkorrektur, einer Decodierung oder Dekomprimierung oder dergleichen unterzogen werden können.

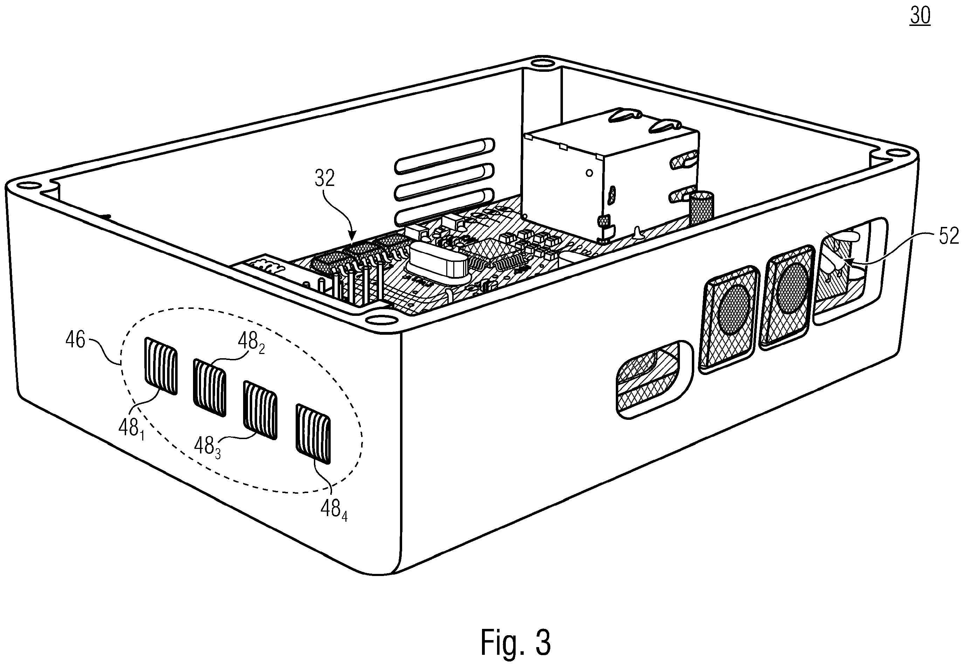

Fig. 3 zeigt eine beispielhafte Ablichtung einer Vorrichtung 30 gemäß einem Ausführungsbeispiel. Diese weist die Steuerungseinrichtung 32 auf und weist auch ansonsten eine mit der Vorrichtung 10 übereinstimmende Funktionalität auf. Die im Zusammenhang mit der Fig. 3 erörterten vorteilhaften Weiterbildungen der Vorrichtung 30 können ohne Weiteres einzeln oder in Kombination zweier oder mehrerer Aspekte in der Vorrichtung 10 eingesetzt werden.

Die Vorrichtung 30 umfasst eine lokale Signalquelle 46, die ausgebildet ist, um ein akustisches und/oder optisches Signal auszugeben. Beispielhaft weist die lokale Signalquelle 46 eine oder mehrere LEDs 48₁ bis 48₄ auf, die aufgrund unterschiedlicher Positionen und/oder aufgrund unterschiedlicher Farben und/oder aufgrund unterschiedlicher Leuchtzeiten oder Blinkrhythmen ausgelegt sind, um basierend auf einer Ansteuerung durch die Steuerungseinrichtung 32 eine mit dem Betrieb oder Zustand der Vorrichtung assoziierte Information auszugeben. Eine derartige Zustandsinformation kann beispielsweise einen regulären Betrieb, einen Fehlerzustand, eine Warnung im Hinblick auf die Energieversorgung und/oder Speicherfüllgrad oder dergleichen aufweisen. Alternativ oder zusätzlich kann ebenso ein Betriebszustand an sich angezeigt werden. So kann beispielsweise eine Einstelleinrichtung 52 vorgesehen sein, beispielsweise durch einen oder mehrere Schalter, insbesondere DIP-Schalter vorgesehen sein, um ein Konfigurationssignal zu erzeugen. Die Steuerungseinrichtung 32 kann ausgebildet sein, um eine Vorrichtungseinstellung, etwa den Betriebszustand, basierend auf einem derartigen Konfigurationssignal zu verändern. Das bedeutet, vermittels der Einstelleinrichtung 52 kann ein Konfigurationssignal erzeugt werden, die Steuerungseinrichtung 32 kann ausgebildet sein, um basierend auf dem Konfigurationssignal einen Betriebsparameter, insbesondere eine Betriebsart oder Details innerhalb der Betriebsart zu verändern. Ein derartiges Konfigurationssignal kann gemäß Ausführungsbeispielen auch von extern vermittels drahtloser oder drahtgebundener Kommunikation erhalten werden. So kann beispielsweise über eine Programmierschnittstelle eine Programmierung der Vorrichtung 30 geändert werden.

Die lokale Signalquelle 46 kann alternativ oder zusätzlich zu einer optischen Ausgabe, die möglicherweise aber nicht notwendigerweise über LEDs erfolgt, für eine Ausgabe eines akustischen Signals ausgelegt sein, das eine mit dem Betrieb oder Zustand der Vorrichtung assoziierte Information ausgibt, etwa eine Ansage, einen Warnton, einen Bestätigungston und/oder andere von einem Benutzer verständliche Informationsdarstellungen.

Vermittels der Einstelleinrichtung 52 und/oder eines externen Konfigurationssignals kann gemäß manchen Ausführungsformen der Betriebszustand der Vorrichtung geändert werden, welcher möglicherweise durch die lokale Signalquelle 46 bestätigt oder angezeigt wird.

Das bedeutet, die Vorrichtung 30 kann ausgebildet sein, um einen aus einer Gruppe von Betriebszuständen auszuführen, möglicherweise im zeitlichen Wechsel. Zu der Gruppe von Betriebszuständen, aus denen der zu betreibende Betriebszustand ausgewählt werden kann, kann beispielsweise gehören, dass in einem Erstbetriebszustand die Vorrichtung die Protokollinformation in den Datenspeicher ablegt und aus dem Datenspeicher liest und an der Datenschnittstelle bereitstellt. Dies kann in Übereinstimmung mit den vorangehenden Erläuterungen erfolgen, das heißt, im zeitlichen Wechsel, in zeitlich disjunkten Abschnitten oder dergleichen. In einem zweiten Betriebszustand kann die Vorrichtung eine Protokollinformation von einer anderen Vorrichtung empfangen und unter Verwendung der Datenschnittstelle weiterleiten. In einem dritten Betriebszustand kann die Vorrichtung ausgebildet sein, um das Ausgeben der Protokollinformation bis zum Eintritt eines vordefinierten Ereignisses zu verzögern. So kann bspw. eine Messreihe empfangen und zwischengespeichert werden, bis das vordefinierte Ereignis eintritt. Dies kann bspw. einhergehen oder ausgelöst werden durch ein Verbinden der Vorrichtung mit einem externen Speichermedium, mit einem drahtgebundenen Auslesen, einem aktivieren einer drahtlos-Schnittstelle zum drahtlosen Übermitteln der Protokollinformationen, mit einem Ende einer Messreihe oder dem Ende eines bestimmten Zustands. Ein solcher Zustand kann einen Flug oder dergleichen umfassen, umfassen während dem die Drahtloskommunikation eingeschränkt ist. Dies schließt eine andere Gruppierung und/oder eine andere Anzahl von Betriebszuständen und/oder andere Funktionen nicht aus. Die Vorrichtung kann zum Betrieb in einem oder mehreren Betriebszuständen ausgebildet sein, etwa im zeitlochen Wechsel.

Der genannte dritte Betriebszustand kann sich von dem ersten Betriebszustand beispielsweise dahin gehend unterscheiden, dass zur Laufzeit der Messung die Protokollinformation lediglich gespeichert aber nicht ausgegeben wird.

Gemäß einem Ausführungsbeispiel kann die Vorrichtung 10 und/oder die Vorrichtung 30 ausgebildet sein, um vermittels der Steuerungseinrichtung 32 eine Authentifizierung an der zweiten Signalquelle auszuführen, was an der Vorrichtung selbst und/oder an der zweiten Signalquelle zu einem hohen Maß an Sicherheit führen kann.

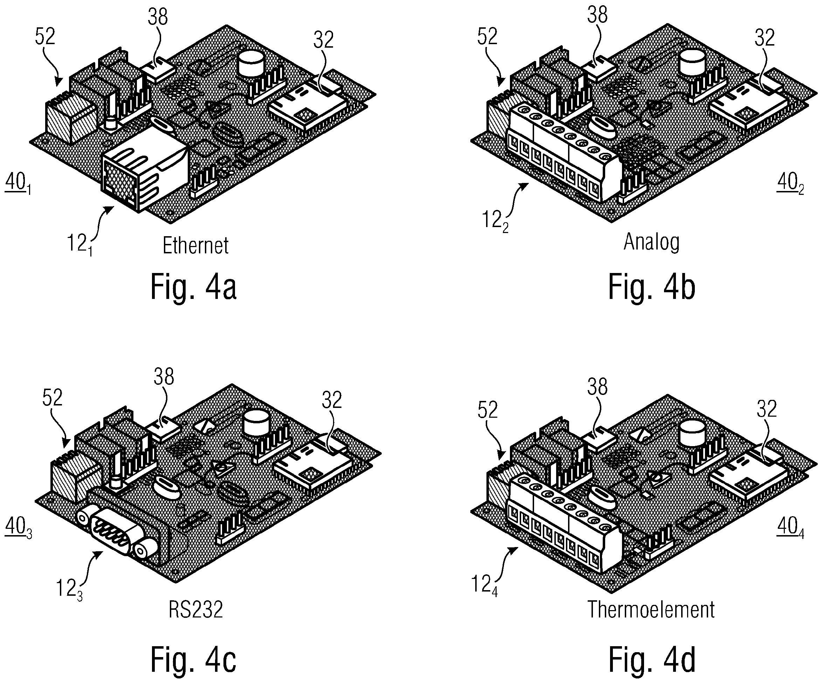

Die Fig. 4a, 4b, 4c und 4d zeigen beispielhafte perspektivische Ansichten von Vorrichtungen 40₁, 40₂, 40₃ und 40₄ gemäß Ausführungsbeispielen. Diese weisen beispielhaft in Übereinstimmung mit der Beschreibung zur Vorrichtung 30 die Einstelleinrichtung 52 auf. Die Datenschnittstelle 38 ist beispielhaft als USB-Schnittstelle ausgeführt. In den unterschiedlichen Vorrichtungen ist der Messwerteingang mit einer Ethernet-Schnittstelle 12₁ gekoppelt. Die Vorrichtung 40₂ weist hierzu eine Analogschnittstelle 12₂ auf, während beispielhaft die Vorrichtung 40₃ eine RS-232-Schnittstelle aufweist. Die Vorrichtung 40₄ kann ebenfalls zum Empfang eines analogen Signals eingerichtet sein und hierzu die Schnittstelle 12₄ aufweisen, wobei diese vorkonfiguriert sein kann, um ein analoges Signal eines Thermoelements zu empfangen. Dies kann entsprechende Signalvorverarbeitung umfassen.

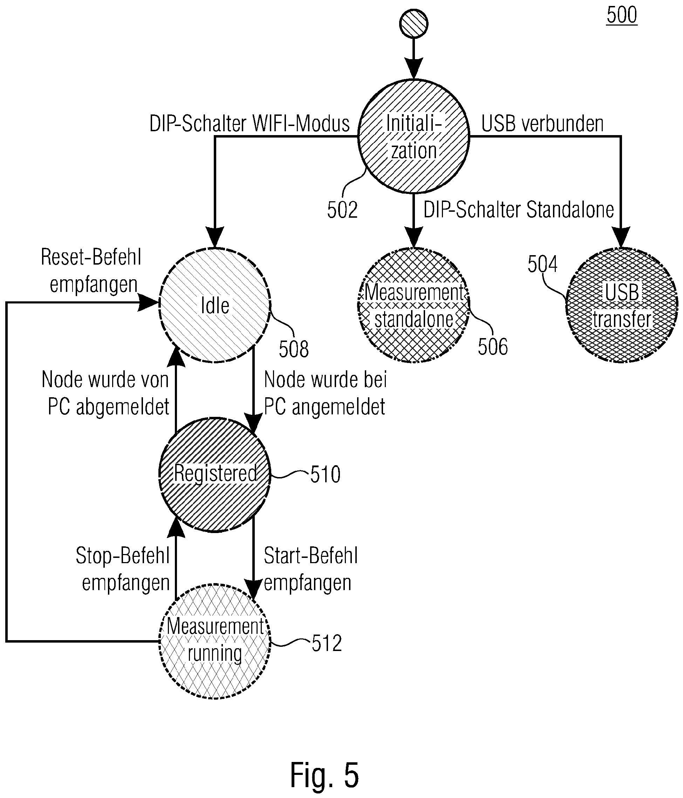

Fig. 5 zeigt ein schematisches Zustandsdiagramm 500 einer hierin beschriebenen Vorrichtung 10, 30 und/oder 40₁ bis 40₄. In einem Initialisierungszustand 502 kann die Steuerungseinrichtung 32 beispielsweise ausgebildet sein, um, sofern vorhanden, eine Einstellung der Einstelleinrichtung 52 auszuwerten und/oder ein entsprechendes Konfigurationssignal zu erhalten und auszuwerten, das drahtgebunden, durch ein externes Speichermedium oder drahtlos empfangen wird. So kann beispielsweise in dem Fall, dass ein Speichermedium mit der Datenschnittstelle 38 verbunden ist, in einen Zustand 504 übergegangen werden, in dem beispielsweise ein Datentransfer zu oder von dem Datenspeicher 34 oder der Steuerungseinrichtung 32 erfolgt. Eine Bereitstellung von Daten vermittels des externen Speichermediums, USB-Stick, kann beispielsweise zur Um-Konfigurierung der Steuerungseinrichtung 32 verwendet werden. Alternativ kann der Datenspeicher 34 abgefragt und geleert werden.

Basierend auf einer anderen Einstellung der Einstelleinrichtung 54 kann beispielsweise ein Zustand 506 eingenommen werden, in dem eine Messung ausgeführt wird, beispielsweise abhängig davon, ob an dem Messwerteingang 12 ein Messwertsignal empfangen wird oder nicht. Dies kann beispielsweise unabhängig von externer Kommunikation erfolgen, engl.: measurement standalone.

Die Einstelleinrichtung 52 kann alternativ hierzu auch einen anderen Betriebsmodus, der beispielsweise als WiFi-Modus bezeichnet wird, einnehmen, wodurch die Vorrichtung einen Zustand 508 einnimmt, der mit Leerlauf/Idle bezeichnet ist. Ausgehend hiervon kann die Vorrichtung eine Authentifizierung ausführen, etwa bei der zweiten Signalquelle, einem PC. Im Erfolgsfall ist die Vorrichtung (Node) am PC angemeldet, so dass ein Zustand 510 (registered) eingenommen werden kann, in welchem die Vorrichtung registriert ist. Basierend auf dem registrierten Zustand 510 erlaubt die Vorrichtung beispielsweise, einen Start-Befehl von dem PC zu empfangen und in den Zustand 512 zu wechseln, in welchem die Messung (measurement) läuft. Basierend auf einem Stopp-Befehl und der gültigen Registrierung kann sich die Vorrichtung 10, 30, 40₁, 40₂, 40₃ und/oder 40₄ dazu entscheiden, wieder in den Zustand 510 zurück zu wechseln und optional ausgehend hiervon wieder in den Zustand 508 zu wechseln. das bedeutet, die Steuerungseinrichtung 32 kann basierend auf der erfolgten Authentifizierung in Übereinstimmung mit den Befehlen der zweiten Signalquelle operieren. Alternativ zum Übertritt in den Zustand 510 kann die Vorrichtung ausgehend vom Zustand 512 basierend auf einem anderen Befehl wieder direkt in den Zustand 508 wechseln, ein derartiges Kommando ist vorliegend als Reset-Befehl bezeichnet. Basierend hierauf kann beispielsweise eine Umkonfiguration der Vorrichtung erfolgen, während aus dem Zustand 510, etwa nach erfolgter Messpause, wieder in den Zustand 512 gewechselt werden kann.

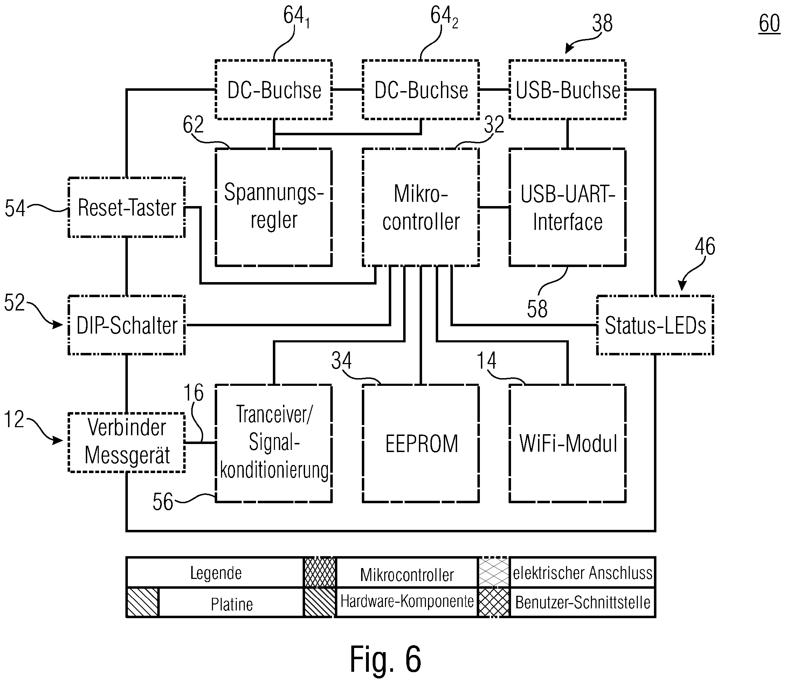

Fig. 6 zeigt ein schematisches Blockschaltbild einer Vorrichtung 60 gemäß einem Ausführungsbeispiel. Neben den Eingängen 12 und 14, etwa als drahtgebundener Verbinder mit dem Messgerät als Teil des Messwerteingangs 12 und einen WiFi^{®}-Modul als zumindest Teil des Zeitinformationseingangs 14 kann die Steuerungseinrichtung 32 mit einem als EEPROM ausgestalteten Datenspeicher 34 gekoppelt sein. Die lokale Signalquelle 46 kann von der Steuerungseinrichtung 32 ebenso gesteuert werden, wie die Steuerungseinrichtung 32 durch die Einstelleinrichtung 52 gesteuert werden kann. Optional kann ein Taster 54 einen Steuerungseingang der Steuerungseinrichtung 32, die beispielhaft als Mikrocontroller implementiert ist, steuern, etwa um ein Reset oder einen anderen vordefinierten Zustandswechsel auszulösen. Der Messwerteingang 12 kann mit einer Signalverarbeitung 56 gekoppelt sein, welche wiederum mittelbar oder unmittelbar mit der Steuerungseinrichtung 32 gekoppelt ist. Die Signalverarbeitungseinrichtung 56 kann als Transceiver ausgelegt sein und/oder zur Signalkonditionierung des Messwertsignals 16 eingerichtet sein. Darüber hinaus kann die Steuerungseinrichtung 32 über eine drahtgebundene Schnittstelle, etwa ein USB-UART-Interface 58 mit der Datenschnittstelle 38 gekoppelt sein.

Ein Spannungsregler 62 kann ausgebildet sein, um an einem oder mehreren Energieversorgungsschnittstellen 64₁ und/oder 64₂ elektrische Leistung von extern zu beziehen, etwa um einen Betrieb der Vorrichtung 40 bereitzustellen und/oder elektrische Leistung bereitzustellen, etwa um eine Peripherie mit der Vorrichtung 60 koppeln zu können.

Beispielhaft, aber nicht einschränkend, sind die Datenschnittstellen 38 sowie die Energieversorgungsschnittstellen 64₁ und 64₂ Teil einer elektrischen Kontaktierung oder eines elektrischen Anschlusses. Der Spannungsregler 62, das Interface 58, das WiFi^{®}-Modul 14, der Datenspeicher 34 sowie die Signalverarbeitungseinrichtung 56 können dabei Hardwarekomponenten bereitstellen. Die Einstelleinrichtung 52 sowie die lokale Signalquelle 46 können dabei als Benutzer-Schnittstellen begriffen werden. Sämtliche Elemente können an einer gemeinsamen Platine angeordnet sein.

Beispielsweise im Zustand 504 der Fig. 5 oder durch Übermitteln entsprechender Signale über das Modul 14 oder die USB-Buchse 38 kann eine Konfiguration der Vorrichtung geändert werden. Damit wird eine Mechanik bereitgestellt, welche es dem Benutzer ermöglicht, eine Vorrichtung zu konfigurieren, um unter anderem den Kommunikationsablauf eines Übertragungsprotokolls zu definieren, welches vom verbundenen Messgerät unterstützt/vorgegeben wird. Durch eine vom Benutzer erstellbare Liste an parametrisierbaren Anweisungen, welche von der Vorrichtung zur Laufzeit ausgeführt werden, können Messwerte aus verschiedensten digitalen Übertragungsprotokollen herausgefiltert und somit eine Vielzahl an Messgeräten im System betrieben werden. Das bedeutet, identisch aufgebaute Vorrichtungen können unterschiedlich konfiguriert und zur Kooperation mit unterschiedlichen Messgeräten eingerichtet werden. Die Anweisungsliste kann 10, 15, 20, 30 oder mehr, beispielsweise bis zu 128 Anweisungen oder mehr enthalten. Die Anweisungen können beispielsweise eine oder mehrere der vorliegenden Gruppen aufweisen:

### Instruktionen zur Kommunikation

- Daten senden
- Daten empfangen
- Empfangspuffer leeren

### Instruktionen zur Analyse von empfangenen Daten

- Nach Datenfolgen suchen
- Datenfolge suchen und ersetzen
- Daten überspringen

### Instruktionen zur Aufnahme und Verarbeitung von Messwerten

- Zahl aus ASCII-String parsen
- Zahl binär lesen
- Rechenoperationen mit Messwerten
- Kanalwert kopieren

Dies sind lediglich beispielhafte Darstellungen unterschiedlicher Gruppen von Instruktionen. Die Vorrichtung kann ausgebildet sein, um die Messwertinformationen mit der Zeitinformation zu der Protokollinformation basierend auf einer Menge von parametrisierbaren oder parametrierbaren Anweisungen zu verknüpfen, wobei die Vorrichtung ausgebildet ist, um basierend auf dem Konfigurationssignal eine Änderung eines Parameters einer parametrisierbaren Anweisung, also eine Änderung der Anweisung selbst, eine Hinzufügung einer zusätzlichen parametrisierbaren Anweisung zu der Menge parametrisierbarer Anweisungen oder einer Gruppe hiervon, einer Entfernung einer parametrisierbaren Anweisung aus der Menge parametrisierbarer Anweisungen, also eine Reduzierung der Anzahl und/oder eine Änderung einer von einer parametrisierbaren Anweisung ausgeführten Instruktion auszuführen.

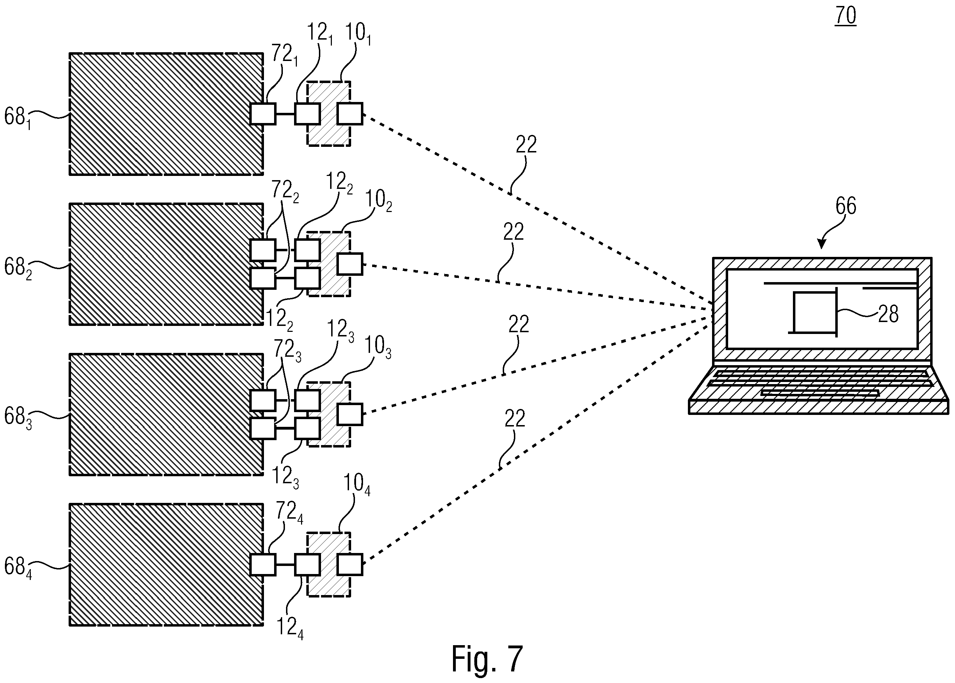

Fig. 7 zeigt ein schematisches Blockschaltbild eines Messsystems gemäß einem Ausführungsbeispiel. Das Messsystem umfasst eine Mehrzahl von hierin beschriebenen Vorrichtungen. Beispielhaft sind Vorrichtungen 10₁, 10₂, 10₃ und 10₄ in Übereinstimmung mit den Erläuterungen zu Fig. 1 dargestellt. Ein oder mehrere dieser Vorrichtungen können als Vorrichtung 30, 40₁, 40₂, 40₃, 40₄ oder 60 ausgeführt sein. Eine Anzahl von derartigen Vorrichtungen ist dabei beliebig und beträgt zumindest 1. Das Messsystem 70 umfasst ferner eine Koordinationseinrichtung, die mit der Mehrzahl von Vorrichtungen 10₁ bis 10₄ gekoppelt ist und für diese Vorrichtungen die zweite Signalquelle 28 darstellt. Die Vorrichtungen 10₁ bis 10₄ können ein übereinstimmendes Zeitinformationssignal 22 empfangen, beispielsweise ein vermittels Broadcast ausgesendetes Drahtlossignal oder ein in einem gemeinsamen Bussystem übermitteltes Signal. Alternativ hierzu können sich die Zeitinformationssignale für die Vorrichtungen 10₁ bis 10₄ auch voneinander unterscheiden, etwa indem jeweils eine Uni-Cast-Nachricht an einen speziellen Empfänger oder Group-Cast-Nachricht an eine definierte Gruppe von Empfängern gesendet wird, deren jeweilige Zeitinformation angepasst ist. Es ist dabei darauf hinzuweisen, dass das Zeitinformationssignal 22 sowohl explizit als auch implizit gesendet werden kann. beispielsweise kann das Zeitinformationssignal 22 auch als gemeinsamer Start-Befehl zum Übergang zwischen den Zuständen 510 und 512 in Fig. 5 übermittelt werden, woraufhin eine relative Zeitbasis geschaffen wird, die für die Erstellung der Protokollinformationen in den Vorrichtungen 10₁ bis 10₄ genutzt werden kann. Dadurch können die Protokollinformationen der Mehrzahl von Vorrichtungen auf einer übereinstimmenden Zeitinformation oder Zeitbasis basieren, auch wenn die Vorrichtungen 10₁ bis 10₄ sowie optional hiermit gekoppelte Messgeräte 68 unabhängig voneinander operieren. Das bedeutet, die Vorrichtungen 10₁ bis 10₄ müssen nicht notwendigerweise synchron arbeiten, können aber eine übereinstimmende Zeitschiene verwenden.

Die dargestellten Messgeräte 68₁ bis 68₄ können optional Teil des Messsystems sein. Jedes der Messgeräte kann auch zur Erfassung zumindest eines Messparameters und zur Bereitstellung eines zugeordneten Messwerts an einem Messwertausgang 72₁, 72₂, 72₃ oder 72₄ eingerichtet sein. Durch die Zeitinformation der Koordinationseinrichtung 66 kann die Zeitinformation 22 für eine Synchronisierung der Protokollinformationen der Mehrzahl von Vorrichtungen sorgen.

Das System 70 kann ferner eine Datenverarbeitungseinrichtung aufweisen, die in der Darstellung der Fig. 7 mit der Koordinationseinrichtung 66 eine gemeinsame Vorrichtung bildet. Die Datenverarbeitungseinrichtung kann jedoch auch eine hiervon separate Vorrichtung des Messsystems sein. Die Datenverarbeitungseinrichtung kann ausgebildet sein, um die Protokollinformationen der Mehrzahl von Vorrichtungen 10₁ bis 10₄ zu empfangen, wobei die Protokollinformationen basierend auf der übereinstimmenden Zeitinformation an der Datenverarbeitungseinrichtung im zeitlichen Bezug zueinander vorliegen. Das bedeutet, die Ergebnisse der unabhängig voneinander arbeitenden Messgeräte 68₁ bis 68₄ können selbst bei voneinander verschiedenen Protokollen oder Schnittstellen der Messgeräte 68₁ bis 68₄ gemeinsam an der Datenverarbeitungseinrichtung beziehungsweise der Koordinationseinrichtung 66 verarbeitet werden.

Vorteilhaft an einem hierin beschriebenen System ist, dass vermittels der Protokollinformation und möglicherweise durch das Konfigurationssignal veränderlich eine Datenstruktur der Messwerteinformation in der Protokollinformation einstellbar ist und/oder über mehrere Vorrichtungen 10 einheitlich einstellbar ist, selbst wenn die Eingangssignale aufgrund unterschiedlicher Messgeräte 68 in der Struktur, dem Inhalt und/oder der Kategorie analog/digital unterschiedlich sind, was synergetische Vorteile an der Vorrichtung 66 mit sich bringt, indem die Protokollnachrichten unterschiedlicher Vorrichtungen 10 in einer einheitlichen Datenstruktur oder Datenbasis vorliegen. Dies ermöglicht eine ressourcensparende Struktur von Datenbanken und/oder Datenverarbeitungsanlagen, da diese auf die einheitliche Form angepasst werden können und unnötiger Aufwand/Ressourcen zur Speicherung oder Verarbeitung von einander verschiedener Strukturen vermieden werden kann indem die Strukturen vorab durch die Vorrichtungen 10 aneinander angeglichen werden.

Die Vorrichtung 66 kann zusammen mit der Signalquelle 28 als ein Rechner mit entsprechend ausgestalteter Bediensoftware implementiert sein.

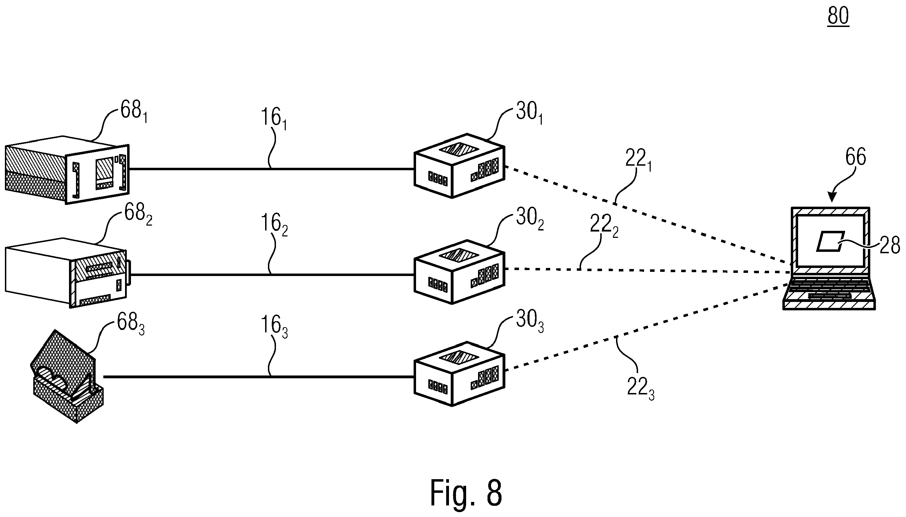

Fig. 8 zeigt ein schematisches Blockschaltbild eines Messsystems 80 gemäß einem Ausführungsbeispiel. Die Koordinationseinrichtung 66 kann auch hier die Signalquelle 28 bereitstellen und individuelle Zeitinformationssignale 22₁, 22₂ und 22₃ an Vorrichtungen 30₁, 30₂, und 30₃ bereitstellen, die jeweils mit voneinander verschiedenen Messgeräten 68₁, 68₂ und 68₃ verbunden sind und als Messwertaufnehmer zum Empfang der Messwertsignale 16₁, 16₂ bzw. 16₃ eingerichtet sind. Die Koordinationseinrichtung 66 kann einen Bedienrechner für zumindest die Vorrichtungen 30₁, 30₂ und 30₃ bereitstellen und durch individuelle Signale 22₁, 22₂ und 22₃ beispielsweise die entsprechenden Aufzeichnungen in den Vorrichtungen 30₁ bis 30₃ starten, stoppen und/oder koordinieren. In Kenntnis, wann das jeweilige Signal 22₁ bis 22₃ an die jeweilige Vorrichtung 30₁ bis 30₃ gesendet wurde, kann mit der entsprechenden Zeitinformation 24 der jeweiligen Protokollinformation eine Synchronisierung der Protokollinformationen der Vorrichtung 30₁, 30₂, und 30₃ erfolgen bzw. eine zeitliche In-Beziehung-Setzung ermöglicht werden.

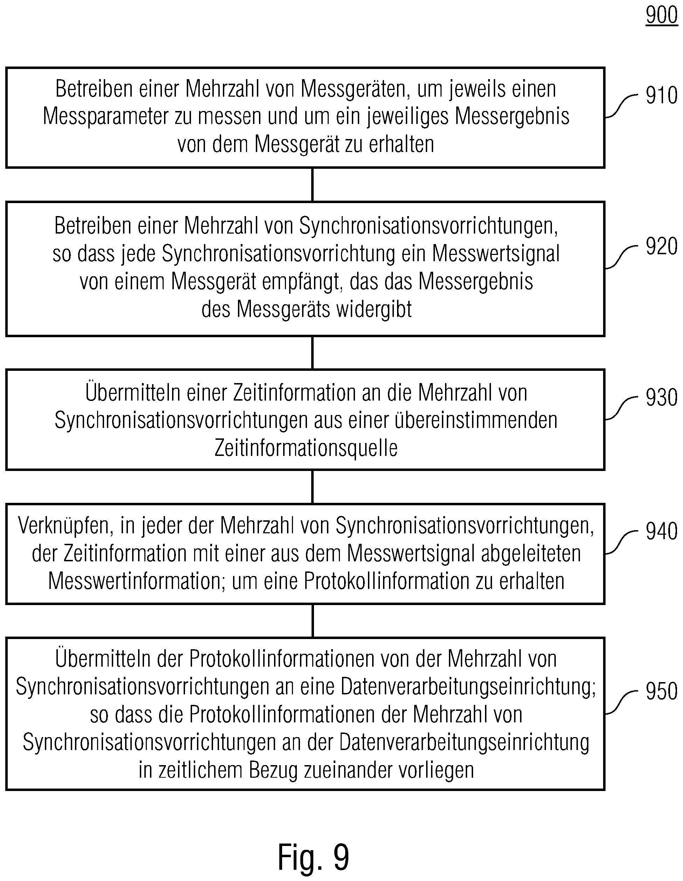

Fig. 9 zeigt ein schematisches Ablaufdiagramm eines Verfahrens 900 gemäß einem Ausführungsbeispiel, das beispielsweise zum Betrieb eines hierin beschriebenen Messsystems verwendet werden kann. Ein Schritt 910 umfasst ein Betreiben einer Mehrzahl von Messgeräten, um jeweils einen Messparameter zu messen und um ein jeweiliges Messergebnis von dem Messgerät zu erhalten, beispielsweise die Messgeräte 68 der Messsysteme 70 oder 80 zum Erfassen beliebiger Messparameter, beispielsweise Temperatur, chemische Zusammensetzung, Konzentrationen, Funkmessungen, Abstandsmessungen oder beliebige andere Messungen. Ein Schritt 920 umfasst ein Betreiben einer Mehrzahl von Synchronisationseinrichtungen, so dass jede Synchronisationseinrichtung ein Messwertsignal von einem Messgerät empfängt, das das Messergebnis des Messgeräts wiedergibt. Als Synchronisationseinrichtung können hierin beschriebene Vorrichtungen 10, 30, 40₁, 40₂, 40₃, 40₄ und/oder 60 verwendet werden.

Ein Schritt 930 umfasst ein Übermitteln einer Zeitinformation an die Mehrzahl von Synchronisationseinrichtungen aus einer übereinstimmenden Zeitinformationsquelle. Ein Schritt 940 umfasst ein Verknüpfen, in jeder der Mehrzahl von Synchronisationsvorrichtungen, der Zeitinformation mit einer aus dem Messwertsignal abgeleiteten Messwertinformation, um eine Protokollinformation zu erhalten. Ein Schritt 950 umfasst ein Übermitteln der Protokollinformationen von der Mehrzahl von Synchronisationsvorrichtungen an eine Datenverarbeitungseinrichtung, etwa in Kombination mit der Koordinationseinrichtung, so dass die Protokollinformationen der Mehrzahl von Synchronisationseinrichtungen an der Datenverarbeitungseinrichtung in zeitlichem Bezug zueinander stehen.

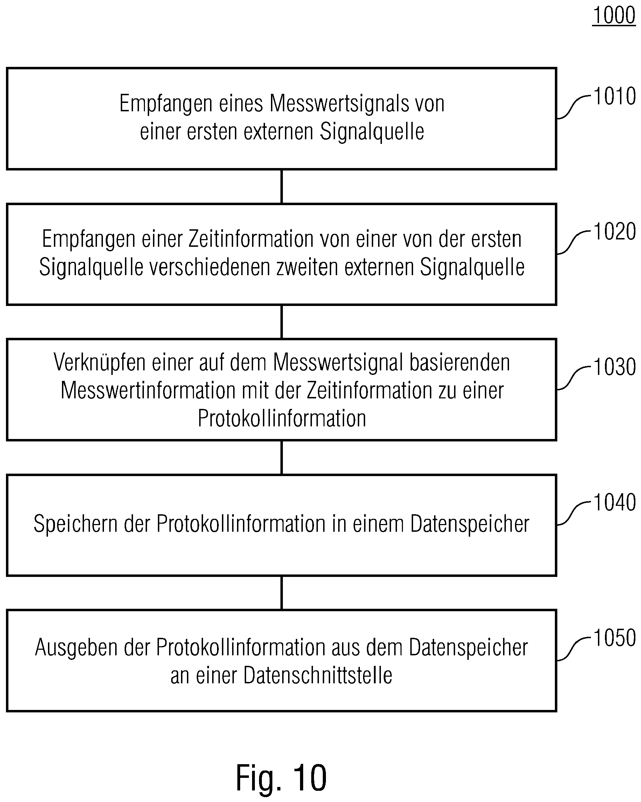

Fig. 10 zeigt ein schematisches Ablaufdiagramm eines Verfahrens 1000 gemäß einem Ausführungsbeispiel, das zum Beispiel zum Betreiben einer hierin beschriebenen Vorrichtung verwendet werden kann. Ein Schritt 1010 umfasst ein Empfangen eines Messwertsignals von einer ersten externen Signalquelle. Ein Schritt 1020 umfasst ein Empfangen einer Zeitinformation von einer zweiten externen Signalquelle, die von der ersten externen Signalquelle verschieden ist. Ein Schritt 1030 umfasst ein Verknüpfen einer auf dem Messwertsignal basierenden Messwertinformation mit der Zeitinformation zu einer Protokollinformation. Ein Schritt 1040 umfasst ein Speichern der Protokollinformation in einem Datenspeicher. Ein Schritt 1050 umfasst ein Ausgeben der Protokollinformation aus dem Datenspeicher an einer Datenschnittstelle der Vorrichtung.

Ausführungsbeispiele stellen Vorrichtungen bereit, die ein Datenlogger-System zumindest teilweise implementieren können und mit welchem das eingangs erläuterte Problem zumindest teilweise gelöst werden kann, indem es die Messdaten verschiedenster Geräte aufnimmt und dem Benutzer in einer einheitlichen Form zur Verfügung stellt.

Erfindungsgemäß wird für die Aufnahme von Messdaten ein dezentrales Erfassungssystem bereitgestellt. Hierbei wird jedes Messgerät mit einer Platine, die im Folgendem auch Node genannt werden kann, ausgestattet, welche die Messdaten des Geräts aufnimmt und drahtlos an eine Bediensoftware mit grafischer Benutzeroberfläche weiterleitet. Die Kommunikation zwischen den Nodes und dem Rechner erfolgt während des Messbetriebs über WiFi beziehungsweise WLAN. Das WLAN-Netzwerk kann dabei von einem WLAN-Router oder von den Nodes selbst aufgebaut werden. Dies bedeutet, gemäß Ausführungsbeispielen kann eine Vorrichtung als Peer und/oder als Router eines WLAN-Netzwerks betrieben werden. Die dezentrale Systemarchitektur erlaubt die Einbindung unterschiedlicher Messgeräte-Schnittstellen, da die Nodes in verschiedenen Varianten bereitgestellt werden können, welche jeweils eine spezifische Schnittstelle unterstützen oder auch mehrere Schnittstellen. So können beispielsweise Nodes für unterschiedliche Schnittstellen und Signale bereitgestellt werden, etwa als digitale Schnittstelle in Form von Ethernet (TCP und/oder UDPfähig), RS232. Alternativ oder zusätzlich kann eine analoge Schnittstelle zur Messung von Spannungen, Strömen oder Widerständen vorgesehen sein. Alternativ oder zusätzlich kann die Auswertung einer Temperatur unter Auswertung von Thermoelementen, beispielsweise der Typen K, J, N, R, S, T, E und/oder B, eingesetzt werden.

Damit die Einbindung zusätzlicher Messgeräte und Protokolle keine neuen Softwaremodule erfordert, können Vorrichtungen gemäß hierin beschriebenen Ausführungsbeispielen eine generische Software unterstützen, welche in der Lage ist, eine vom Benutzer erstelle Konfiguration zu interpretieren. Diese Konfiguration bestimmt unter anderem das Verhalten der Nodes zur Laufzeit hinsichtlich der Kommunikation mit dem Messgerät und der Verarbeitung von Messdaten. Der Benutzer hat somit die Möglichkeit, neue Geräte selbstständig in das System zu integrieren. Eine Konfiguration kann in der Bediensoftware erstellt und über eine USB-Schnittstelle oder auf anderem Wege auf die Nodes übertragen werden, welche die Konfiguration persistent speichern kann. Die Erstellung und Übertragung der Konfiguration können dabei im Rahmen eines Messvorgangs einmalige Vorgänge sein, solange die Node einem Messgerät zugeordnet ist. Wird eine Node einem neuen Messgerät zugeordnet, kann deren Konfiguration entsprechend angepasst werden. Die Konfigurationsmechanik kann einen relevanten Bestandteil der Ausführungsbeispiele umfassen.

Die Messgeräte mit digitalen Schnittstellen können verschiedene Protokolle anwenden, welche sich in Ablauf, Codierung und Aufbau stark unterscheiden. Eine Besonderheit hierin beschriebener Vorrichtungen und/oder Messsysteme liegt darin, dass es dem Benutzer die Möglichkeit bietet, einer Node das vom Messgerät verwendete Protokoll beizubringen, indem Kommunikationsabläufe, Parsinganweisungen und durchzuführende Rechenoperationen sequentiell in die Konfiguration eingetragen werden. Die aus den Protokollen gefilterten Messwerte werden von den Nodes in ein einheitliches Datenformat überführt und können von der Bediensoftware weiterverarbeitet werden. Ein entwickelter Algorithmus zur Zeitsynchronisation zwischen dem Rechner und den Nodes erlaubt die Verknüpfung der Messwerte mit deren Aufnahmezeitpunkten. Eine Abweichung von der Systemzeit oder innerhalb der unterschiedlichen Nodes kann dabei weniger als 250 ms, weniger als 200 ms oder weniger als 150 ms betragen. Ausführungsbeispiele sehen vor, dass eine hierin beschriebene Vorrichtung vermittels eines Konfigurationssignals einstellbar ist, im Hinblick darauf, wie das Messwertsignal zu verarbeiten und/oder zu decodieren ist, um in unterschiedlichen Konfigurationen einen jeweiligen Messwert aus unterschiedlichen Bitfolgenstrukturen zu extrahieren.

Die Bediensoftware kann die Möglichkeit bieten, die Nodes synchron während der Messung zu überwachen und aufgenommene Messdaten grafisch darzustellen. Nach Beenden der Messung können die Messdaten als Text-Datei oder als Tabellen-Arbeitsmappe exportiert werden. Dabei liegen alle exportierten Messwerte in einem einheitlichen Datenformat vor, unabhängig davon, mit welchem Protokoll sie vom jeweiligen Messgerät übertragen wurden. Dies ist dadurch möglich, dass die Vorrichtungen einstellbar sind, in welcher Form die Protokolldateien, die auf einem extrahierten Messwert basieren, erzeugt werden sollen, etwa anhand des Konfigurationssignals. Aufgrund der exakten Verknüpfung von Messwert und Aufnahmezeitpunkt ist es im Nachgang möglich, aufgezeichnete Messdaten verschiedener Messgeräte miteinander zu vergleichen und zu korrelieren und Rückschlüsse auf zeitabhängige Wechselwirkungen, etwa chemische Reaktionen oder physikalische Effekte, zu ziehen.

Für Messkampagnen in elektromagnetisch sensiblen Umgebungen, etwa in Flugzeugen, kann das System ohne die Verwendung eines WLAN-Netzwerks betrieben werden. Dabei speichern die Nodes aufgenommene Messwerte auf einem internen Speicher und können im Nachgang über die Bediensoftware und/oder Wechseldatenträger ausgelesen werden.

Einer der erfindungsgemäßen Vorteile besteht in der Möglichkeit, alle an einer Messung beteiligten Geräte in ein zentrales System einzubinden, welche eine entsprechende Schnittstelle zur Verfügung stellen. Durch die Minimierung der Anzahl an verschiedenen Systemen während einer Messung wird die benötigte Arbeitszeit der auswertenden Personen deutlich reduziert.

Durch die unabhängig voneinander ausgeführten Protokollabläufe können die Messdaten verschiedenster Messgeräte in einer einheitlichen Datenstruktur zur Verfügung gestellt und simultan zur laufenden Messung verfolgt werden. Beispielsweise generiert das System für alle eingebundenen Geräte aufgrund der zwischengeschalteten Nodes dieselben Messdateien, das heißt, gleiche Zeitstempel, gleiche Messwertintervalle und gleiche Datenformate, etwa im Hinblick auf englisch-deutsche Unterscheidungen, Datumsformate, Dezimalstellen oder dergleichen. Sowohl die Vorbereitung der Messaufbauten als auch die nachfolgende technische Auswertung durch einen Mitarbeiter kann dadurch erheblich beschleunigt werden. Weitere Vorteile liegen in der verringerten Fehleranfälligkeit durch einen Wegfall der Notwendigkeit händischer Übertragungen und einer erhöhten Sicherheit durch drahtlose Übertragung. Die dezentrale Architektur ermöglicht den Verzicht auf lange Übertragungsleitungen in Messbereichen und die Messwertverfolgung außerhalb der potenziell kontaminierten Bereiche. Dadurch wird die Arbeitssicherheit erhöht, da die Mitarbeiter während der laufenden Messung die Messräume zur Überwachung nicht betreten müssen, um sich Schadstoffen auszusetzen.

Relevante Messkanäle und deren Kerngrößen können je nach bestehender Fragestellung ausgewählt werden, so dass dies die Speicherkapazität der Messrechner schont. Neben der Datenspeicherung in großen synchronen Messdateien können je Gerät auch einzelne Datensätze generiert werden, die ebenfalls den gleichen Zeitstempel aufweisen. Das Datenlogger-System, Messsystem, ist aufgrund der kompakten und handlichen Bauweise und einem möglichen geringen Leistungsbedarf von in etwa 2 W pro Node sowohl für den stationären als auch für den mobilen Einsatz unter anderem auf Messfahrten und in Messkampagnen ausgelegt. Durch die variable Eingangsspannung im Bereich von beispielsweise 5 bis 36 V können die Nodes beispielsweise durch das Boardnetz (beispielsweise 12 V) in Kraftfahrzeugen versorgt werden. Somit bietet das Gesamtsystem zahlreiche Freiheitsgrade, die je nach Applikation zielgerichtet ausgewählt werden können.

Der Code zur Ausführung und die Mechanik der konfigurierbaren Protokollabläufe können zum Teil unzugänglich in den Vorrichtungen gespeichert und verankert sein. Eine der erfindungsgemäßen Besonderheiten kann in der Kombination aus der Verbindung von analogen Schnittstellen und digitalen Protokollen zu einem gemeinsamen Protokoll in einem Messsystem und deren dynamischen Konfiguration spezifisch für Laborsensoren und -detektoren gesehen werden. Weiterhin ist die vom Benutzer einstellbare Anweisungsliste zur Umsetzung von digitalen Übertragungsprotokollen ein Herausstellungsmerkmal des Systems. Der Nachweis der Verletzung erfolgt durch Überprüfung der eingebundenen Geräte, der vom Benutzer erstellbaren Konfiguration der Nodes, der zeitgleichen Verwendung verschiedenster Übertragungsprotokolle und der zeitkorrekten Zusammenführung zu einem einheitlichen Datensatz.

Ausführungsbeispiele können zur Messwerterfassung im mobilen Einsatz, unter anderem bei Messkampagnen in öffentlichen Gebäuden, wie Schulen, Kindergärten und Museen, zum Beispiel in einer Kombination aus Lüftungsampel, Schimmeldetektoren und Feuchtigkeitssensoren, eingesetzt werden. Weitere Anwendungsgebiete sind zum Beispiel Laboratorien, etwa Umwelt- und Lebensmittellabore, mikrobiologische, medizinische und pharmakologische Labore, Elektroniklabore, Werkstofflabore, akkreditierte Labore und dergleichen, die verschiedene Sensor- und Detektionssysteme zu einem einheitlichen Protokoll zusammenführen können.

Hierin beschriebene Vorrichtungen und Systeme können darüber hinaus auf andere Berufszweige und Branchen, etwa der Medizintechnik, der Lebensmittelüberwachung, der Verfahrenstechnik oder Wetterstationen, übertragen werden und bieten somit anwendungsspezifische Lösungen. Weitere Anwendungsgebiete sind raumklimatische Fragestellungen an unter anderem Anemometer, Hygrometer und Thermometer, die bei Bausachverständigen problemlos und schnell installiert und erfasst werden können.

Eine kundenspezifische Personalisierung, unter anderem mit Firmenlogo und Beschriftung, der Datenlogger-Vorrichtungen kann dieses System ebenfalls für Hersteller der oben beschriebenen Mess- und Sensortechnik interessant machen.

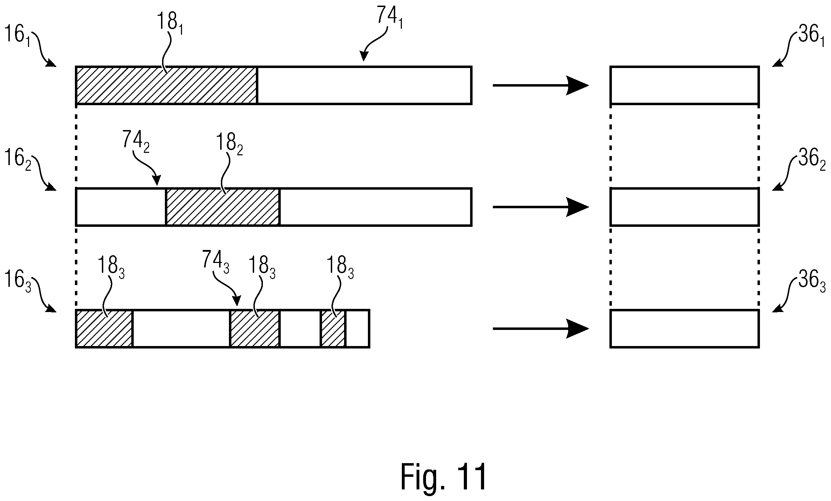

Fig. 11 zeigt ein schematisches Blockschaltbild unterschiedlicher exemplarischer und möglicherweise digital von unterschiedlichen Messgeräten bereitgestellter Messwertsignale 16₁, 16₂ und 16₃. Diese weisen basierend auf der Konfiguration des Messgeräts die Messfeldinformationen 18₁, 18₂ beziehungsweise 18₃ möglicherweise in unterschiedlicher Länge, unterschiedlicher Auflösung, an unterschiedlichen Positionen möglicherweise voneinander verschieden strukturierter oder eine unterschiedliche Anzahl von Bits aufweisender Bitfolgen 74₁, 74₂ und 74₃ auf. Die jeweilige Vorrichtung, die mit dem Messgerät gekoppelt ist, kann aufgrund eines bereitgestellten Konfigurationssignals derart eingerichtet werden, dass in Kenntnis der erwarteten Bitfolge 74₁, 74₂ und/oder 74₃ sowie der Eigenschaften und/oder des Orts der Messwertinformation 18₁, 18₂ oder 18₃ eine entsprechende Herausfilterung beziehungsweise Extraktion möglich ist. Es ist möglich, aber nicht notwendig, dass die unterschiedlichen Vorrichtungen eines Messsystems bezüglich der Datenstruktur übereinstimmende Protokollinformationen 36₁, 36₂ und 36₃ bereitstellen, was es ermöglicht, eine einfache und effiziente Korrelation oder Verknüpfung der Protokollinformationen beziehungsweise der extrahierten Messwerte an der Datenverarbeitungseinrichtung bereitzustellen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung mit:
einem Messwerteingang (12) zum Empfangen eines Messwertsignals (16) von einer ersten externen Signalquelle (26);
einem Zeitinformationseingang (14) zum Empfangen einer Zeitinformation (24) von einer von der ersten Signalquelle (26) verschiedenen zweiten externen Signalquelle (28);
einem Datenspeicher (34);
eine Steuerungseinrichtung (32), die ausgebildet ist, um eine auf dem Messwertsignal (16) basierende Messwertinformation mit der Zeitinformation (24) zu einer Protokollinformation (36) verknüpfen und die Protokollinformation (36) in dem Datenspeicher (34) zu speichern;
wobei die Vorrichtung ausgebildet ist, um die Protokollinformation (36) an der Datenschnittstelle (38) auszugeben.

2. Vorrichtung gemäß Anspruch 1, bei dem der Zeitinformationseingang (14) mit einer Drahtlosschnittstelle gekoppelt sind; und/oder bei der der Messwerteingang (12) mit einer drahtgebundenen oder drahtlosen Schnittstelle gekoppelt ist.

3. Vorrichtung gemäß Anspruch 1 oder 2, bei der die Steuerungseinrichtung (32) ausgebildet ist, um die Protokollinformation (36) basierend auf einer von der Vorrichtung empfangenen Anfrage (42) an der Datenschnittstelle (38) auszugeben.

4. Vorrichtung gemäß einem der vorangehenden Ansprüche, die ausgebildet ist, um basierend auf dem Messwertsignal (16) eine Mehrzahl von zeitdiskreten Messwerteinformationen innerhalb eines ersten Zeitintervalls zu erhalten;
wobei die Steuerungseinrichtung (32) ausgebildet ist, um jede der Mehrzahl von Messwertinformationen mit einer jeweiligen Zeitinformation (24) zu verknüpfen, um eine Mehrzahl von Protokollinformationen (36) zu erhalten; und um die Mehrzahl von Protokollinformationen (36) in dem Datenspeicher (34) zu speichern;
wobei die Steuerungseinrichtung (32) ausgebildet ist, um die Mehrzahl von Protokollinformationen (36) zu einem späteren zweiten Zeitintervall aus dem Datenspeicher (34) zu lesen und an der Datenschnittstelle (38) auszugeben.

5. Vorrichtung gemäß Anspruch 4, bei der die Steuerungseinrichtung (32) ausgebildet ist, um die Mehrzahl von Protokollinformationen (36) gebündelt in einer gemeinsamen Protokollnachricht (44) mit der Datenschnittstelle (38) auszugeben.

6. Vorrichtung gemäß einem der vorangehenden Ansprüche, die ausgebildet ist, um fortlaufend Messwertinformationen als Protokollinformationen (36) in dem Datenspeicher (34) zu puffern und zyklisch, basierend auf einer Anfrage (42) und/oder basierend auf einem Kommunikationsprotokoll der Datenschnittstelle (38) in einer jeweiligen gemeinsamen Protokollnachricht (44) zu bündeln und an der Datenschnittstelle (38) auszugeben.

7. Vorrichtung gemäß einem der vorangehenden Ansprüche, bei der die Steuerungseinrichtung (32) ausgebildet ist, um das Messwertsignal (16) mit einer Signalverarbeitung zu verarbeiten, um die Messwertinformation (18) zu erhalten.

8. Vorrichtung gemäß einem der vorangehenden Ansprüche, die eine lokale Signalquelle (46) aufweist, die ausgebildet ist, um vermittels eines akustischen und/oder optischen Signals eine mit dem Betrieb oder Zustand der Vorrichtung assoziierte Information auszugeben.

9. Vorrichtung gemäß einem der vorangehenden Ansprüche, die ausgebildet ist, um die Messwertinformation (18) aus dem Messwertsignal (16) basierend auf einer Vorrichtungseinstellung abzuleiten; wobei die Vorrichtung ausgebildet ist, um die Vorrichtungseinstellung basierend auf einem empfangenen Konfigurationssignal zu verändern.

10. Vorrichtung gemäß Anspruch 9, die ausgebildet ist, um die Messwertinformation (18) mit der Zeitinformation (24) zu der Protokollinformation (36) basierend auf einer Menge von parametrierbaren Anweisungen zu verknüpfen; wobei die Vorrichtung ausgebildet ist, um basierend auf dem Konfigurationssignal zumindest eines aus:
• einer Änderung eines Parameters der parametrierbaren Anweisungen,
• einer Hinzufügung einer zusätzlichen parametrierbaren Anweisungen zu der Menge parametrisierbarer Anweisungen;
• einer Entfernung einer parametrierbaren Anweisungen aus der Menge parametrisierbarer Anweisungen;
• einer Änderung einer von einer der parametrisierbaren Anweisungen ausgeführten Instruktion
auszuführen.

11. Vorrichtung gemäß einem der vorangehenden Ansprüche, die ausgebildet ist, um einen Betrieb in einem Betriebszustand aus eine Gruppe von Betriebszuständen auszuführen, wobei die Gruppe von Betriebszuständen umfasst:
• einen ersten Betriebszustand in welchem die die Vorrichtung die Protokollinformation (36) in den Datenspeicher (34) ablegt, aus dem Datenspeicher (34) liest und an der Datenschnittstelle (38) bereitstellt;
• einem zweiten Betriebszustand in welchem die Vorrichtung eine Protokollinformation (36) von einer anderen Vorrichtung empfängt und unter Verwendung der Datenschnittstelle (38) weiterleitet;
• einen dritten Betriebszustand in welchem die Vorrichtung ausgebildet ist, um das Ausgeben der Protokollinformation (36) bis zum Eintritt eines vordefinierten Ereignisses zu verzögern.

12. Vorrichtung gemäß einem der vorangehenden Ansprüche, bei der die Steuerungseinrichtung (32) ausgebildet ist, um eine Authentifizierung an der zweiten Signalquelle (28) auszuführen.

13. Vorrichtung gemäß einem der vorangehenden Ansprüche, die ausgebildet ist, um einen von der ersten oder zweiten Signalquelle (28) empfangenen Steuerungsbefehl auszuführen.

14. Messsystem mit:
einer Mehrzahl von Vorrichtungen gemäß einem der vorangehenden Ansprüche,
einer Koordinationseinrichtung (66), die mit der Mehrzahl von Vorrichtungen als gemeinsame zweite Signalquelle (28) gekoppelt ist und ausgebildet ist, um der Mehrzahl von Vorrichtungen die Zeitinformation (24) bereitzustellen; wobei Koordinationseinrichtung (66) durch die Zeitinformation (24) für eine Synchronisierung der Mehrzahl von Vorrichtungen eingerichtet ist;
wobei die Protokollinformationen (36) der Mehrzahl von Vorrichtungen auf einer übereinstimmenden Zeitinformation (24) basiert.

15. Messsystem gemäß Anspruch 14 mit einer Mehrzahl von Messgeräten (68), von denen jedes mit einer der Mehrzahl von Vorrichtungen gekoppelt und zur Erfassung zumindest eines Messparameters und zur Bereitstellung eines zugeordneten Messwerts an einem Messwertausgang (72) eingerichtet ist;
wobei Koordinationseinrichtung (66) durch die Zeitinformation (24) für eine Synchronisierung der Protokollinformationen (36) der Mehrzahl von Vorrichtungen eingerichtet ist.

16. Messwertsystem gemäß Anspruch 14 oder 15, ferner umfassend eine Datenverarbeitungseinrichtung, die ausgebildet ist, um die Protokollinformationen (36) von der Mehrzahl von Vorrichtungen zu empfangen, wobei die Protokollinformationen (36) basierend auf der übereinstimmenden Zeitinformation (24) an der Datenverarbeitungseinrichtung in zeitlichem Bezug zueinander vorliegen.

17. Verfahren (900) umfassend:
Betreiben (910) einer Mehrzahl von Messgeräten, um jeweils einen Messparameter zu messen und um ein jeweiliges Messergebnis von dem Messgerät zu erhalten;
Betreiben (920) einer Mehrzahl von Synchronisationsvorrichtungen, so dass jede Synchronisationsvorrichtung ein Messwertsignal von einem Messgerät empfängt, das das Messergebnis des Messgeräts wiedergibt;
Übermitteln (930) einer Zeitinformation an die Mehrzahl von Synchronisationsvorrichtungen aus einer übereinstimmenden Zeitinformationsquelle;
Verknüpfen (940), in jeder der Mehrzahl von Synchronisationsvorrichtungen, der Zeitinformation mit einer aus dem Messwertsignal abgeleiteten Messwertinformation; um eine Protokollinformation zu erhalten; und
Übermitteln (950) der Protokollinformationen von der Mehrzahl von Synchronisationsvorrichtungen an eine Datenverarbeitungseinrichtung; so dass die Protokollinformationen der Mehrzahl von Synchronisationsvorrichtungen an der Datenverarbeitungseinrichtung in zeitlichem Bezug zueinander vorliegen.
